# EUROPÄISCHE PATENTSCHRIFT

(11) **EP 4 010 216 B1**
(45) Veröffentlichungstag und Bekanntmachung des Hinweises auf die Patenterteilung: **29.10.2025**
(21) Anmeldenummer: 20771474.2
(22) Anmeldetag: 02.09.2020
(51) Int. Cl.: B60L 53/00, H04L 9/40, B60L 53/65, B60L 53/66, G07F 17/00, G06Q 20/38, H04L 9/32

(54) **VERFAHREN UND AUTORISIERUNGSEINRICHTUNG ZUR ZERTIFIKATBASIERTEN AUTORISIERUNG EINES LEISTUNGSBEZIEHERS AN EINER ABGABESTATION**
METHOD AND AUTHORIZATION DEVICE FOR THE CERTIFICATE-BASED AUTHORIZATION OF A SERVICE USER AT A DELIVERY STATION
PROCÉDÉ ET DISPOSITIF D'AUTORISATION PERMETTANT L'AUTORISATION BASÉE SUR UN CERTIFICAT D'UN UTILISATEUR DE SERVICE AU NIVEAU D'UNE STATION DE DISTRIBUTION

(30) Priorität: 24.09.2019 DE 102019214590
(43) Veröffentlichungstag der Anmeldung: 15.06.2022
(73) Patentinhaber: Siemens Aktiengesellschaft, 80333 München (DE)
(72) Erfinder: BODE, Sebastian, 59229 Ahlen (DE)
(74) Vertreter: Siemens Patent Attorneys
(86) Internationale Anmeldenummer: PCT/EP2020/074422
(87) Internationale Veröffentlichungsnummer: WO 2021/058245

(56) Entgegenhaltungen:
- DE-A1- 102011 101 535
- DE-A1- 102017 008 669
- ROBLES ANTONIO GONZÁLEZ ET AL: "Sichere mobile Identifizierung und Authentisierung", DATENSCHUTZ UND DATENSICHERHEIT - DUD, SP GABLER VERLAG, WIESBADEN, vol. 38, no. 10, 1 October 2014 (2014-10-01), pages 684 - 690, XP036731936, ISSN: 1614-0702, [retrieved on 20141001], DOI: 10.1007/S11623-014-0271-X

## Beschreibung

Die Erfindung betrifft eine Autorisierungseinrichtung und ein Verfahren zur zertifikatbasierten Autorisierung eines Leistungsbeziehers an einer Abgabestation. Die Erfindung betrifft insbesondere eine Autorisierung eines Ladevorgangs an einem Ladepunkt.

Fortschritte in der Digitalisierung führen dazu, dass eine Vertragsbeziehung zwischen einem Leistungsbezieher und einem Leistungsanbieter zunehmend indirekter wird. In der Mobilkommunikation ist beispielsweise eine auch als »Roaming« bekannte indirekte Vertragsbeziehung prominent, bei der ein Leistungsbezieher - hier ein Mobilfunknetzteilnehmer - Teilnehmer eines anderen Mobilfunknetzdienstes wird, als des Mobilfunknetzdienstes, den sein Leistungsanbieter - hier sein Mobilfunknetzbetreiber - zur Verfügung stellt.

Bei der technischen Durchführung des Roamingvorgangs werden Teilnehmerdaten des Mobilfunknetzteilnehmers vom Mobilfunknetzbetreiber des besuchten Mobilfunknetzdienstes angefordert, damit der Teilnehmer zunächst authentifiziert und sodann seine Autorisierung zur Benutzung des besuchten Mobilfunknetzdienstes überprüft werden kann. Für diese Autorisierung ist eine - aus Sicht der vertraglichen Beziehung zwischen dem Mobilfunknetzteilnehmer und dem Mobilfunknetzbetreiber - weitere indirekte Vertragsbeziehung zwischen den sogenannten Roaming-Partnern erforderlich, welche meist vorab in sogenannten Roaming-Agreements festgelegt wurden. Bestandteil eines solchen Roaming-Agreements ist insbesondere eine Verrechnung einer Durchleitungsleistung zwischen den Roaming-Partnern.

Eine ähnliche - aber bedeutend weitergehende - indirekte Vertragsbeziehung ist auf dem Gebiet der Elektromobilität als »E-Roaming« bekannt. E-Roaming ermöglicht es einem Leistungsbezieher, welcher eine vertragliche Beziehung mit einem Elektromobilitätsanbieter als Leistungsanbieter unterhält, sein Elektrofahrzeug an öffentlichen Ladestationen oder Ladepunkten zu laden, welche nicht notwendigerweise durch den Elektromobilitätsanbieter selbst betrieben werden.

Zur näheren Beschreibung der technischen und vertraglichen Beziehungen ist zunächst der Elektromobilitätsanbieter oder EMP (»Electro Mobility Provider«) zu unterscheiden von einem Betreiber des Ladepunkts oder CPO (»Charge Point Operator«). Der letztgenannte CPO ist in überwiegenden Fällen eine vom EMP unabhängige wirtschaftliche Einheit. Für eine Autorisierung eines Ladevorgangs des Leistungsbeziehers ist daher wie im oben beschriebenen Roaming in der Mobilkommunikation eine Vertragsbeziehung zwischen den Roaming-Partnern, hier dem EMP und dem CPO, erforderlich.

Diese Vertragsbeziehung in der Elektromobilität ist im Vergleich zum Roaming in der Mobilkommunikation insbesondere dahingehend weitergehender, als die derzeit absehbaren Vertragsbeziehungen einerseits multilateral und andererseits ad hoc zu gestalten sind. Multilaterale Vertragsbeziehungen entstehen aufgrund einer Vielzahl von Ladepunktbetreibern oder CPOs, deren Ladepunkt der Leistungsbezieher potentiell verwenden kann. Da beim Roaming in der Elektromobilität die aus der Mobilkommunikation bekannten, vorab festgelegten Vertragsbeziehungen mit dieser Vielzahl an CPOs meist fehlen - oder zumindest nicht alle Umstände der Vertragsbeziehung berücksichtigen - sind Bedingungen für die Leistungserbringung zwischen einem EMP und dem CPO, gegebenenfalls auch unter Beteiligung des Leistungsbeziehers, oft ad hoc auszuhandeln. Das Dokument Sichere mobile Identifizierung und Authentisierung (Robles Antonio González; Pohlmann Norbert) offenbart ein Verfahren für das Roaming in der eMobility am Beispiel von Ladesäulen.

Nach Abschluss der Aushandlung bezüglich der indirekten Vertragsbeziehung zwischen dem CPO - oder allgemeiner: Der Abgabestation - und dem EMP - oder allgemeiner: Dem Leistungsanbieter - erfolgt üblicherweise eine Autorisierung des Ladevorgangs - oder allgemeiner: Des Leistungsbezugs - durch den Leistungsanbieter. Die vorstehenden Verallgemeinerungen verdeutlichen, dass die dieser Beschreibung zugrundeliegende Aufgabe nicht auf eine Anwendung in der Elektromobilität beschränkt ist.

Aufgabe der Erfindung ist es, ein Verfahren zur Autorisierung eines Leistungsbeziehers anzugeben, welches eine technische Grundlage für eine Aushandlung einer indirekte Vertragsbeziehung zwischen einer Abgabestation und einem Leistungsanbieter schafft.

Die Aufgabe wird durch ein Verfahren mit den Merkmalen des Patentanspruchs 1 sowie durch eine Autorisierungseinrichtung mit den Merkmalen des Patentanspruchs 10 gelöst.

Das erfindungsgemäße Verfahren zur zertifikatbasierten Autorisierung eines Leistungsbeziehers, umfasst folgende Schritte:
a) Entgegennahme eines Authentifikationsdatums des Leistungsbeziehers an einer Abgabestation;
b) Entnahme eines digitalen Zertifikats aus dem Authentifikationsdatum und Extraktion mindestens eines Zertifikattributs aus dem digitalen Zertifikat;
c) Bildung eines Ressourcenidentifikators zur Adressierung einer Netzwerkressource eines dem Leistungsbezieher (USR) zuzuordnenden Leistungsanbieters (EMP) derart, dass ein Abschnitt einer Zeichenkettenrepräsentation des Ressourcenidentifikators zumindest einen Abschnitt enthält, welcher basierend auf zumindest einem Zertifikattribut gebildet ist und dass ein weiterer Abschnitt der Zeichenkettenrepräsentation des Ressourcenidentifikators zumindest ein von der Abgabestation (CO) gewähltes Datum enthält;
d) Aufbau einer Kommunikationsverbindung zur Netzwerkressource des Leistungsanbieters;
e) Initiierung eines Zertifikatsvalidierungsprotokolls über die Kommunikationsverbindung unter Verwendung des digitalen Zertifikats; und;
f) Autorisierung eines Leistungsbezugs in Abhängigkeit einer Antwort gemäß dem Zertifikatsvalidierungsprotokoll.

Der erfindungsgemäße erste Schritt a) sieht eine Authentifizierung des Leistungsbeziehers anhand mindestens eines dem Leistungsbezieher zugordneten Authentifikationsdatums vor. Ein Authentifikationsdatum wird beispielsweise aus einer Verwendung einer Wertkarte in Verbindung mit einer Eingabe einer persönlichen Identifikationsnummer, abkürzend PIN, oder aus einem mobilen Endgerät des Leistungsbeziehers in Verbindung mit einer auf dem mobilen Endgerät zum Ablauf gebrachten Applikation bestimmt. Das Authentifikationsdatum enthält ein digitales Zertifikat, welches vorzugsweise zugunsten des Leistungsanbieters ausgestellt wurde.

In einem folgenden Schritt b) wird mindestens ein Zertifikattribut aus dem digitalen Zertifikat entnommen.

In einem folgenden Schritt c) erfolgt eine Bildung eines Ressourcenidentifikators zur Adressierung einer Netzwerkressource - in der Fachwelt auch als URI oder Uniform Ressource Locator bekannt - welcher eine dem Leistungsbezieher zuzuordnenden Leistungsanbieter adressiert. Die Bildung des Ressourcenidentifikators erfolgt dabei als eine Zeichenkette, bei der ein Abschnitt zumindest einen Abschnitt enthält, welcher basierend auf zumindest einem Zertifikattribut gebildet wird und bei der ein weiterer Abschnitt zumindest ein von der Abgabestation gewähltes Datum - seinerseits als Zeichenkettenrepräsentation - enthält. Die so gebildete URI basiert somit auf Informationen, welche sich zu einem Teil aus den Informationen einer oder mehrerer Zertifikatsattribute und zu einem anderen Teil aus Informationen ergeben, welche die Abgabestation zur Verfügung stellt.

In einem folgenden Schritt d) erfolgt ein Aufbau einer Kommunikationsverbindung zur Netzwerkressource des Leistungsbeziehers unter Verwendung des in Schritt c) gebildeten Ressourcenidentifikators. Die mit dem Ressourcenidentifikator adressierte Netzwerkressource ist auf dem Server des Leistungsanbieters entweder bereits eingerichtet oder wird nach Empfang dieser URI serverseitig eingerichtet, insbesondere durch zur Laufzeit dynamisch bestimmte Ressourcen bzw. Kommunikationsendpunkte auf Seiten des Servers.

In einem folgenden Schritt e) erfolgt eine Initiierung eines Zertifikatsvalidierungsprotokoll über die Kommunikationsverbindung unter Verwendung des in Schritt b) aus dem Authentifikationsdatum extrahierten digitalen Zertifikats. Dieses Zertifikatsvalidierungsprotokoll geht erfindungsgemäß über den eigentlichen Zweck einer Validierung des Zertifikats hinaus, indem die protokollgemäße Antwort auf die Zertifikatsvalidierungsanfrage erfindungsgemäß auch als Autorisierungsfreigabe verwendet wird. Die serverseitige protokollgemäße Antwort durch den Server des Leistungsanbieters auf die Zertifikatsvalidierungsanfrage kann positiv, negativ oder auch ein Verweis auf einen alternativen Leistungsanbieter sein. Bei einem zuletzt genannten Verweis wird eine alternative URI - also einen Ressourcenidentifikator zur Adressierung einer alternativen Netzwerkressource - eines alternativen Leistungsanbieter zurückgegeben, welche in einer Ausgestaltung der Erfindung für eine erneute Anfrage unter Adressierung des alternativen Leistungsanbieters verwendet wird.

Ergibt eine Prüfung in Schritt f), dass gemäß dem Zertifikatsvalidierungsprotokoll eine positive Antwort empfangen wurde, erfolgt schließlich eine Autorisierung des Leistungsbezugs, z.B. des Ladevorgangs am Ladepunkt.

Die Erfindung betrifft weiterhin eine Autorisierungseinrichtung zur zertifikatbasierten Autorisierung eines Leistungsbeziehers an einer Abgabestation. Die erfindungsgemäße Autorisierungseinrichtung ist für einen Einbau in einer Abgabestation oder eine kommunikative Zuordnung zu einer Abgabestation vorgesehen.

Ein oder mehrere von der Erfindung ausgewertete und verwendete Zertifikattribute werden in vorteilhafter Weise zum Ansprechen des Leistungsanbieters genutzt, optional, z.B. bei einem - weiter unten näher erläuterten - Verweis, auch eines alternativen Leistungsanbieters als den im Zertifikattribute hinterlegten Leistungsanbieters. Für den Fall, dass ein Austeller des Zertifikats unbekannt ist - und dementsprechend ein diesbezügliches Zertifikatsabttribut ungültig oder leer ist - kann auch eine Anfrage bei externen Dienstleistern, insbesondere sogenannter Roaming-Plattformen erfolgen, ob diese bereit sind, Kosten für die Leistungserbringung gegenüber der Abgabestation zu tragen. Weiterhin kann, alternativ oder zusätzlich, ein Abschnitt des Ressourcenidentifikators, auch einer Datenbank entnommen werden, in der eine solche Zuordnung besteht.

Ein besonderer Vorteil des erfindungsgemäßen Verfahrens besteht darin, eine technische Lösung zu schaffen, bei der die vom Leistungsanbieter zu treffende Entscheidung zur Autorisierung des Leistungsbezugs von Besonderheiten der Abgabestation abhängig gemacht werden kann wie zum Beispiel eine Art des Ladepunkts, dessen maximale Ladeleistung oder ähnliches. Die Bildung des Ressourcenidentifikators ermöglicht beispielsweise eine Übermittlung einer Identifikation bzw. Identifikationsnummer der Abgabestation, durch die dem Server per Datenbanksuche ein weiterer Zugriff auf Besonderheiten diese Abgabestation ermöglicht wird. Weitere Besonderheiten können optional durch entsprechende Erweiterung des Ressourcenidentifikators hinzugefügt werden. Das erfindungsgemäße Verfahren, angewandt auf den Bereich der Elektromobilität, ermöglicht also beispielsweise eine automatisierte Autorisierungsanfrage an einen Elektromobilitätsanbieter oder EMP von Seiten eines Ladepunkts, bei der Konditionen des Betreibers oder CPO dieses Ladepunkts in der Autorisierungsanfrage übermittelt werden. Das von der Abgabestation - im Anwendungsfall der Elektromobilität: vom Ladepunkt - gewählte Datum kann neben einer Identifikation des Ladepunkts auch eine Eigenschaft des Ladepunkts oder ein Parameter sein. Beispielsweise kann eine maximale Ladeleistung oder ein Entgelt bzw. Preis für den Ladevorgang übermittelt werden, der vom Betreiber des Ladepunkts, dem Charging Point Operator oder CPO, erhoben wird.

Die erfindungsgemäße Ausgestaltung einer Bildung eines Ressourcenidentifikators zur Kodierung von Besonderheiten und Konditionen der Abgabestation gewährleistet eine gebotene Datensparsamkeit bei der Übermittlung von Details über den Leistungsbezieher oder der Abgabestation, gleichzeitig wird allen Beteiligten umfängliche Gestaltungsfreiheit für eine Aushandlung indirekter Vertragsbeziehungen ermöglicht.

Als Schnittstelle für die Aushandlung indirekter Vertragsbeziehungen wird erfindungsgemäß ein einfaches Standardprotokoll verwendet, während komplexe geschäftliche Entscheidungen und die Aushandlungen hierzu bei den beteiligten Parteien implementiert werden. Der Komplexitätsgrad dieser Implementierungen hat im Wesentlichen nur Auswirkungen darauf, wie fein differenziert dem Ressourcenidentifikators oder URI verschiedene Bedeutungen zugemessen werden. Dieser Ansatz ermöglicht eine Aushandlung indirekter Vertragsbeziehungen in unterschiedlichen Komplexitätsgraden, welche von sehr einfachen Implementierungen bis zu sehr komplexen reichen können.

Die Gültigkeit des Zertifikats für einen Leistungsbezug wird erfindungsgemäß nicht nur anhand statischer Informationen bewertet, sondern mit zusätzlichen, dynamischen, Informationen angereichert. In vorteilhafter Weise wird also die Authentifizierungsfunktion des Zertifikats von der Autorisierung so getrennt, dass die Autorisierung an einer anderen Stelle - beim Leistungsanbieter - vorgenommen wird, als an der Stelle - an der Abgabestation - an der das Zertifikat zur Authentifizierung dient. Dadurch können die Rollen besser abgebildet werden.

Die erfindungsgemäße Autorisierungs- und Authentifizierungslösung ist nicht auf eine Anwendung in der Elektromobilität beschränkt und kann für beliebige indirekte Vertragsbeziehungen eingesetzt werden, in denen sich der Leistungsanbieter zur Erfüllung der Leistung einer anderen Partei, also dem Betreiber der Abgabestation, bedient, wobei der Leistungsempfänger direkten Kontakt zur Abgabestation hat, welche aber nicht der direkte Vertragspartner des Leistungsempfängers ist.

Weitere Ausgestaltungen der Erfindung sind Gegenstand der abhängigen Patentansprüche.

Gemäß einer Ausgestaltung des erfindungsgemäßen Verfahrens wird die Zeichenkettenrepräsentation des Ressourcenidentifikators so modifiziert, dass der basierend auf dem zumindest einem Zertifikattribut gebildete Abschnitt zumindest einen Abschnitt der Zeichenkettenrepräsentation des Zertifikattributs enthält. Während die allgemeinere Anweisung der Erfindung den gebildeten erstgenannten Abschnitt enthält, der auf zumindest einem Zertifikattribut basiert - und damit auch Modifikationen zulässt - wird gemäß der hier vorgestellten Ausgestaltung die Zeichenkettenrepräsentation des jeweiligen Zertifikattributs ohne Modifikationen eingesetzt.

Gemäß einer Ausgestaltung des erfindungsgemäßen Verfahrens wird die Zeichenkettenrepräsentation des Ressourcenidentifikators so modifiziert, dass der weitere Abschnitt, der ein von der Abgabestation gewähltes Datum enthält, zumindest eine Identifikation oder Identifikationsnummer - ihrerseits als Zeichenkettenrepräsentation - der Abgabestation enthält.

In einer Ausgestaltung des erfindungsgemäßen Verfahrens werden als Zertifikatsvalidierungsprotokoll das bereits bekannte Online Certificate Status Protocol, abkürzend OCSP, oder das Server-based Certificate Validation Protocol, abkürzend SCP, eingesetzt.

Gemäß einer Ausgestaltung des erfindungsgemäßen Verfahrens ist vorgesehen, dass eine nach der Initiierung des Zertifikatsvalidierungsprotokoll empfangene Antwort daraufhin untersucht wird, ob diese einen Verweis auf einen Ressourcenidentifikator zur Adressierung einer alternativen Netzwerkressource. Die alternative Netzwerkressource kann dabei den gleichen Leistungsanbieter der ursprünglichen Anfrage adressieren oder, alternativ auch einen vom Leistungsanbieter der ursprünglichen Anfrage verschiedenen Leistungsanbieters. Ein Verweis ist neben einer positiven oder negativen Antwort eine alternative Antwort im Rahmen des Zertifikatsvalidierungsprotokolls, welche einen Verweis auf einen anderen als den angefragten Ressourcenidentifikator enthält. Dieser Verweis bietet insbesondere eine vorteilhafte Möglichkeit des Leistungsanbieters, eine Anfrage nicht binär zu beantworten - also zu bestätigen oder abzulehnen - sondern Alternativen im Sinne einer Aushandlung der indirekten Vertragsbeziehung anzubieten. Ein Anwendungsbeispiel für eine solche Aushandlung unter Anwendung dieses Verweises ist eine Kodierung des Ressourcenidentifikators mit einer Information über einen maximalen Preis, bis zu der vom Betreiber der Abnahmestation ein Leistungsbezug akzeptiert werden kann, wobei vom Client - also ein vom Betreiber der Abnahmestation implementierter Geschäftsprozess - ein bestimmter Preis angefragt wird, der bestimmte Preis vom Server - also ein vom Leistungsanbieter implementierter Geschäftsprozess - aber nicht akzeptiert wird und daher, seitens des Leistungsanbieters, ein niedrigerer Preis vorgeschlagen wird, in dem ein entsprechend kodierter, alternativer Ressourcenidentifikator zurückgesandt wird, welcher ein entsprechendes Preisangebot enthält. Es liegt dann in der Entscheidung des Clients, ob er durch Aufruf dieses Verweises eine solche Anfrage stellt, den Leistungsbezieher abweist oder auch eine gänzlich andere Anfrage stellt.

Gemäß einer Ausgestaltung des erfindungsgemäßen Verfahrens ist vorgesehen, dass vor einer Entscheidung des Clients, eine erneute oder alternative erfindungsgemäße Anfrage zu stellen, eine Bestätigung durch den Leistungsbezieher angefordert wird.

Es kann zusätzlich vorgesehen sein, dass der Server vor einer Freigabe, also einer positiven Antwort, seinerseits eine Anfrage an den Leistungsbezieher stellt. So könnte dieser beispielsweise darauf aufmerksam gemacht werden, dass in kurzer Entfernung eine Abgabestation mit einem günstigeren Angebot zur Verfügung steht und ein Leistungsbezug an der derzeitigen Abgabestation nur gegen ein Zusatzentgelt möglich ist, obwohl der Vertrag des Leistungsbeziehers mit dem Leistungsanbieter grundsätzlich eine Jahrespauschale vorsieht. Dies ermöglicht es einem Leistungsanbieter, seinem Kunden - dem Leistungsbezieher - einen Vertrag anzubieten, mittels dessen sie bei einer Vielzahl von Abgabestationen für eine Jahrespauschale Leistungen zu beziehen, ohne den Leistungsanbieter einem Risiko auszusetzen, dass der Leistungsbezieher Abgabestationen auswählt, bei denen das der Leistungsbezug um ein Vielfaches teurer ist. In einer vorteilhaften Ausgestaltung ist hierzu vorgesehen, dass ein Aufbau einer Kommunikationsverbindung zwischen einem Server des Leistungsanbieters und einem mobilen Endgerät des Leistungsbeziehers erfolgt, woraufhin weitere Daten zum Leistungsbezug über die Kommunikationsverbindung ausgetauscht werden, insbesondere alternative oder weitere Angebote des Leistungsanbieters zum Leistungsbezug.

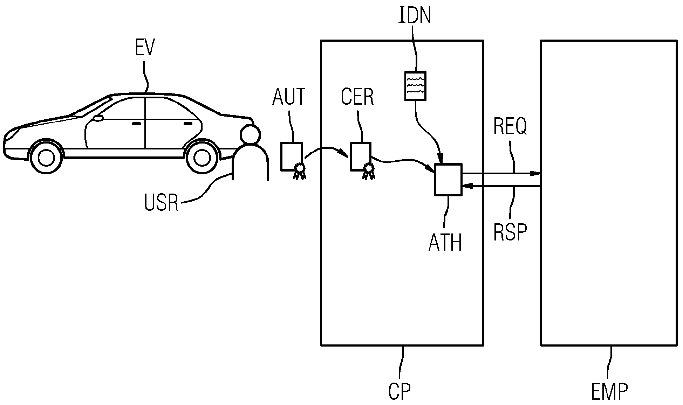

Im Folgenden werden weitere Ausführungsbeispiele und Vorteile der Erfindung anhand der Zeichnung näher erläutert. Dabei zeigt die einzige FIG eine schematische Darstellung einer zertifikatbasierten Autorisierung eines Leistungsbeziehers.

Gemäß diesem Ausführungsbeispiel in der Elektromobilität wird dem Leistungsbezieher URS elektrische Energie als Leistung angeboten. Die FIG zeigt demgemäß einen Ausschnitt aus einer Ladeinfrastruktur zum Laden von Elektrofahrzeugen EV beziehungsweise zumindest teilweise elektrisch angetriebenen Fahrzeugen. Hierzu umfasst die Ladeinfrastruktur einen Ladepunkt CP, an dem das Elektrofahrzeugs EV eines Benutzers USR des Ladepunkts CP über ein entsprechendes - nicht dargestelltes - Ladekabel angeschlossen werden kann.

Die Authentifizierung des Benutzers USR beginnt durch Entgegennahme eines Authentifikationsdatums AUT vom Benutzer, beispielsweise mit Hilfe einer - nicht dargestellten - elektronischen Karte, auf der eines oder mehrere Authentifikationsdaten AUT hinterlegt sind.

Aus diesem Authentifikationsdatums AUT wird ein digitales Zertifikat CER entnommen. Das Zertifikat ist beispielsweise gemäß dem ITU-T-Standard X.509 erstellt worden und wird auch im Ladepunkt CP nach diesem Standard gehandhabt.

Aus dem Zertifikat CER wird mindestens ein Zertifikattribut extrahiert. Einige Zertifikattribute sind unverschlüsselt innerhalb des Zertifikats CER eingebettet, so dass ihre Extraktion keinen größeren rechentechnischen Aufwand erfordert. Sollten die für das Verfahren benötigten Zertifikattribute in einem verschlüsselten Teil liegen, wird das dieser Teil des Zertifikats oder das gesamte Zertifikat zunächst entschlüsselt, bevor die Zertifikatattribute extrahiert werden.

In einem - nicht dargestellten - Zuordnungsmodul, welches innerhalb des Ladepunkts CP angeordnet ist oder diesem zumindest teilweise kommunikativ zugeordnet wird, erfolgt nun eine Bildung eines Ressourcenidentifikators zur Adressierung einer Netzwerkressource eines dem Leistungsbezieher zuzuordnenden Leistungsanbieters EMP. In einer einfachen Ausgestaltung werden die in einem »Authority«-Abschnitt hinterlegten Daten aus dem Zertifikat CER entnommen.

Weiterhin werden aus Identifikationsdaten IDN des Ladepunkts CP weitere Charakterisierungen zum Ladepunkt CP entnommen, beispielsweise die in einem »Path«-Abschnitt hinterlegten Daten, welche den Betreiber des Ladepunkts CP und dessen interne Ladepunktkennung kennzeichnen.

Aus der Zeichenkettenrepräsentation dieser Daten wird sodann ein Ressourcenidentifikators zur Adressierung einer - nicht dargestellten - Netzwerkressource eines dem Leistungsbezieher USR zuzuordnenden Leistungsanbieters EMP gebildet.

In einer einfachen Ausgestaltung umfasst ein im »Authority«-Abschnitt des Zertifikat CER hinterlegtes Datum die Zeichenkette:
http://www.emp-provider.com

Das im »Path«-Abschnitt der Identifikationsdaten IDN hinterlegte Datum umfasst beispielsweise die Zeichenkette:
cp-operator/germany/munich/1.3.45

Das Zuordnungsmodul bildet aus diesen Zeichenketten eine Zeichenkette des Ressourcenidentifikators derart, dass ein Abschnitt einer Zeichenkettenrepräsentation des Ressourcenidentifikators zumindest einen Abschnitt einer Zeichenkettenrepräsentation des Zertifikattributs enthält und dass ein weiterer Abschnitt der Zeichenkettenrepräsentation des Ressourcenidentifikators zumindest einen Abschnitt einer Zeichenkettenrepräsentation einer Identifikation der Abgabestation enthält, also beispielsweise durch Konkatenation der beiden Zeichenketten
http://www.emp-provider.com/cp-operator/germany/munich/1.3.45

Der oben dargestellte Ressourcenidentifikator oder URI basiert somit auf Informationen, welche sich zu einem Teil aus den Informationen einer oder mehrerer Zertifikatsattribute und zu einem anderen Teil aus Informationen ergeben, welche die Abgabestation CP zur Verfügung stellt. Diesem Ressourcenidentifikator können weitere Daten hinzugefügt werden, welche eine Gestaltung der indirekten Vertragsbeziehung betreffen, beispielsweise aktualisierte Entgelte durch die Abgabestation CP etc.

Die mit dem Ressourcenidentifikator adressierte Netzwerkressource ist auf dem Server des Leistungsanbieters entweder bereits eingerichtet oder wird nach Empfang dieser URI serverseitig eingerichtet, insbesondere durch zur Laufzeit dynamisch bestimmte Ressourcen bzw. Endpunkte auf Seiten des Servers.

In einem folgenden Schritt erfolgt eine Initiierung eines Zertifikatsvalidierungsprotokoll über eine Kommunikationsverbindung zwischen einem Authentifikationsmodul ATH, also einem Kommunikationsendpunkt auf Seiten des Ladepunkts CP und einem - nicht dargestellten - Kommunikationsendpunkt auf Seiten des Leistungsanbieters EMP. Der Kommunikationsendpunkt ATH sendet hierzu eine Zertifikatsvalidierungsanfrage REQ gemäß einem Zertifikatsvalidierungsprotokoll, beispielsweise Online Certificate Status Protocol bzw. OCSP oder Server-based Certificate Validation Protocol bzw. SCP unter Einbeziehung des digitalen Zertifikats CER.

In Beantwortung der Anfragenachricht REQ sendet der Leistungsanbieters EMP eine protokollgemäße Antwortnachricht RSP auf die Zertifikatsvalidierungsanfrage REP.

Die protokollgemäße Antwortnachricht RSP durch den Server des Leistungsanbieters EMP kann positiv, negativ oder auch ein Verweis auf einen alternativen - nicht dargestellten - Leistungsanbieter sein. Entsprechend der eigentlichen Zertifikatsvalidierungsfunktion ist die protokollgemäße Antwortnachricht RSP durch den Server des Leistungsanbieters EMP jedenfalls dann negativ, wenn das übertragene Zertifikat ungültig ist. Erfindungsgemäß wird die Antwortnachricht RSP auf die Zertifikatsvalidierungsanfrage REP im Weiteren auch für eine weitere Aushandlung von Bedingungen des Leistungsbezugs und schlussendlich für eine Autorisierungsfreigabe am Ladepunkt CP verwendet.

Bei einem oben genannten Verweis durch die protokollgemäße Antwortnachricht RSP wird eine alternative URI - also einen Ressourcenidentifikator zur Adressierung einer alternativen Netzwerkressource - desselben Leistungsanbieters EMP oder eines alternativen Leistungsanbieters mit der Antwortnachricht RSP zurückgegeben, welche beispielsweise für eine erneute - nicht dargestellte - Zertifikatsvalidierungsanfrage unter Adressierung der alternativen Netzwerkressource verwendet werden kann.

Ergibt eine z.B. im Kommunikationsendpunkt ATH durchgeführte Prüfung der Antwortnachricht RSP, dass gemäß dem Zertifikatsvalidierungsprotokoll eine positive Antwort empfangen wurde, erfolgt schließlich eine Autorisierung des Leistungsbezugs, im Ausführungsbeispiel also eine Autorisierung des Ladevorgangs am Ladepunkt CP.

Bevor der Leistungsanbieters EMP eine protokollgemäße Antwortnachricht RSP sendet, können die mit der Zertifikatsvalidierungsanfrage REQ gesendeten Anfragedaten auch überprüft werden, beispielsweise auch durch serverseitig Heranziehung weitere Information. Ein Beispiel für die Heranziehung weiterer Informati onen ist eine Abfrage einer Ladepunktdatenbank, aus der die an einem bestimmten Ladepunkt angeboten Konditionen hervorgehen und in der nach einer bestimmten Ladepunktkennung gesucht werden kann. Es kann also serverseitig eine Entscheidung auf Basis wei terer Informationen getroffen werden. Für die Entscheidung berücksichtigt werden können dabei auch Informationen, die der Leistungsanbieter EMP anlässlich einer Anfrage bezieht, welche nicht notwendigerweise auf den aus der Anfragenachricht REQ des Ladepunkts CP übertragenen Daten beruhen. Beispielsweise könnte der Leistungsanbieter EMP aktuelle Konditionen auch bei - nicht dargestellten - Betreibern anderer Abgabestation abrufen.

Weiterhin kann die empfangene Antwortnachricht RSP daraufhin untersucht werden, ob diese einen Verweis auf einen Ressourcenidentifikator zur Adressierung einer alternativen Netzwerkressource enthält. Die alternative Netzwerkressource kann dabei den gleichen Leistungsanbieter der ursprünglichen Anfrage adressieren oder, alternativ auch einen vom Leistungsanbieter der ursprünglichen Anfrage verschiedenen Leistungsanbieters.

Ein Verweis ist neben einer positiven oder negativen Antwort eine alternative Antwort im Rahmen des Zertifikatsvalidierungsprotokolls, welche einen Verweis auf einen anderen als den angefragten Ressourcenidentifikator enthält. Dieser Verweis bietet insbesondere eine vorteilhafte Möglichkeit des Leistungsanbieters EMP, eine Anfrage nicht binär zu beantworten - also zu bestätigen oder abzulehnen - sondern Alternativen im Sinne einer Aushandlung der indirekten Vertragsbeziehung anzubieten.

Ein Anwendungsbeispiel für eine solche Aushandlung unter Anwendung dieses Verweises ist eine Kodierung des Ressourcenidentifikators mit einer Information über einen maximalen Preis, bis zu der vom Betreiber der Abnahmestation ein Leistungsbezug akzeptiert werden kann, wobei vom Client - also ein vom Betreiber der Ladetation CP implementierter Geschäftsprozess - ein bestimmter Preis angefragt wird, der bestimmte Preis vom Server - also ein vom Leistungsanbieter EMP implementierter Geschäftsprozess - aber nicht akzeptiert wird und daher, seitens des Leistungsanbieters EMP, ein niedrigerer Preis vorgeschlagen wird, in dem ein entsprechend kodierter, alternativer Ressourcenidentifikator zurückgesandt wird, welcher ein entsprechendes Preisangebot enthält. Es liegt dann in der Entscheidung des Clients, ob er durch Aufruf dieses Verweises eine solche Anfrage stellt, den Leistungsbezieher USR abweist oder auch eine gänzlich andere Anfrage stellt.

Zur weiteren Prüfung nach Empfang der Zertifikatsvalidierungsanfrage REQ kann zusätzlich vorgesehen sein, dass der Server vor einer Freigabe, also einer positiven Antwort, seinerseits eine Anfrage an den Leistungsbezieher URS stellt. So könnte dieser beispielsweise darauf aufmerksam gemacht werden, dass in kurzer Entfernung eines Ladepunkts CP mit einem günstigeren Angebot zur Verfügung steht und ein Leistungsbezug am derzeitigen Ladepunkt CP nur gegen ein Zusatzentgelt möglich ist, obwohl der Vertrag des Leistungsbeziehers USR mit dem Leistungsanbieter EMP grundsätzlich eine Jahrespauschale vorsieht.

Dies ermöglicht es einem Leistungsanbieter EMP, dem Leistungsbezieher USR einen Vertrag anzubieten, mittels dessen er bei einer Vielzahl von Ladepunkten CP für eine Jahrespauschale Leistungen beziehen kann, ohne den Leistungsanbieter EMP einem Risiko auszusetzen, dass der Leistungsbezieher USR solche Ladepunkte CP auswählt, bei denen das der Leistungsbezug um ein Vielfaches teurer ist.

In einer vorteilhaften Ausgestaltung ist hierzu vorgesehen, dass ein Aufbau einer - nicht dargestellten - Kommunikationsverbindung zwischen einem Server des Leistungsanbieters EMP und einem - nicht dargestellten - mobilen Endgerät des Leistungsbeziehers USR erfolgt, woraufhin weitere Daten zum Leistungsbezug über die Kommunikationsverbindung ausgetauscht werden, insbesondere alternative oder weitere Angebote des Leistungsanbieters zum Leistungsbezug.

## Patentansprüche

1. Verfahren zur zertifikatbasierten Autorisierung eines Leistungsbeziehers, umfassend folgende Schritte:
a) Entgegennahme eines Authentifikationsdatums (AUT) des Leistungsbeziehers (USR) an einer Abgabestation (CP),
b) Entnahme eines digitalen Zertifikats (CER) aus dem Authentifikationsdatum und Extraktion mindestens eines Zertifikattributs aus dem digitalen Zertifikat (CER);
c) Bildung eines Ressourcenidentifikators zur Adressierung einer Netzwerkressource eines dem Leistungsbezieher (USR) zuzuordnenden Leistungsanbieters (EMP) derart, dass ein Abschnitt einer Zeichenkettenrepräsentation des Ressourcenidentifikators zumindest einen Abschnitt enthält, welcher basierend auf zumindest dem Zertifikattribut gebildet wird und dass ein weiterer Abschnitt der Zeichenkettenrepräsentation des Ressourcenidentifikators zumindest ein von der Abgabestation (CP) gewähltes Datum enthält;
d) Aufbau einer Kommunikationsverbindung von der Abgabestation zur Netzwerkressource des Leistungsanbieters (EMP) unter der Verwendung des Ressourcenidentifikators ;
e) Initiierung eines Zertifikatsvalidierungsprotokolls über die Kommunikationsverbindung unter Verwendung des digitalen Zertifikats (CER); und;
f) Autorisierung eines Leistungsbezugs, zwischen dem Leistungsbezieher und der Abgabestation, in Abhängigkeit einer Antwort (RSP) gemäß dem Zertifikatsvalidierungsprotokoll.

2. Verfahren gemäß Patentanspruch 1, **dadurch gekennzeichnet, dass** der basierend auf dem zumindest einem Zertifikattribut gebildete Abschnitt der Zeichenkettenrepräsentation des Ressourcenidentifikators zumindest einen Abschnitt einer Zeichenkettenrepräsentation des Zertifikattributs enthält.

3. Verfahren gemäß einem der vorgenannten Patentansprüche, **dadurch gekennzeichnet, dass** der ein von der Abgabestation (CP) gewähltes Datum enthaltende weitere Abschnitt der Zeichenkettenrepräsentation des Ressourcenidentifikators zumindest eine Identifikation der Abgabestation enthält.

4. Verfahren gemäß einem der vorgenannten Patentansprüche, **dadurch gekennzeichnet, dass** als Zertifikatsvalidierungsprotokoll ein Online Certificate Status Protocol bzw. OCSP oder ein Server-based Certificate Validation Protocol bzw. SCP eingesetzt werden.

5. Verfahren gemäß einem der vorgenannten Patentansprüche, **dadurch gekennzeichnet, dass** eine nach der Initiierung des Zertifikatsvalidierungsprotokoll empfangene Antwort (RSP) daraufhin untersucht wird, ob diese einen Verweis auf einen Ressourcenidentifikator zur Adressierung einer alternativen Netzwerkressource enthält.

6. Verfahren gemäß Patentanspruch 5, **dadurch gekennzeichnet, dass** die Schritte d) bis e) mit dem Ressourcenidentifikator zur Adressierung der alternativen Netzwerkressource erneut durchgeführt werden.

7. Verfahren gemäß Patentanspruch 6, **dadurch gekennzeichnet, dass** vor der erneuten Durchführung der Schritte d) bis e) eine Bestätigung durch den Leistungsbezieher (USR) angefordert wird.

8. Verfahren gemäß Patentanspruch 7, **dadurch gekennzeichnet, dass** dem Leistungsbezieher (USR) vor Anforderung seiner Bestätigung eine oder mehrere Rahmendaten des durch den alternativen Ressourcenidentifikator angebotenen Leistungsbezugs angezeigt werden.

9. Verfahren gemäß einem der vorgenannten Patentansprüche, **gekennzeichnet durch** die Schritte:
- Aufbau einer Kommunikationsverbindung zwischen einem Server des Leistungsanbieters und einem mobilen Endgerät des Leistungsbeziehers;
- Austausch weiterer Daten zum Leistungsbezug über die Kommunikationsverbindung.

10. Autorisierungseinrichtung zur zertifikatbasierten Autorisierung eines Leistungsbeziehers an einer Abgabestation, umfassend:
- ein Authentifikationsmodul zur Entgegennahme eines Authentifikationsdatums (AUT) des Leistungsbeziehers (USR), zur Entnahme eines digitalen Zertifikats (CER) aus dem Authentifikationsdatum und Extraktion mindestens eines Zertifikattributs aus dem digitalen Zertifikat (CER);
- ein Zuordnungsmodul zur Bildung eines Ressourcenidentifikators zur Adressierung einer Netzwerkressource eines dem Leistungsbezieher (USR) zuzuordnenden Leistungsanbieters (EMP) derart, dass ein Abschnitt einer Zeichenkettenrepräsentation des Ressourcenidentifikators zumindest einen Abschnitt enthält, welcher basierend auf zumindest dem Zertifikattribut gebildet ist und dass ein weiterer Abschnitt der Zeichenkettenrepräsentation des Ressourcenidentifikators zumindest ein von der Abgabestation (CO) gewähltes Datum enthält;
- ein Schnittstellenmodul zum Aufbau einer Kommunikationsverbindung von der Abgabestation zur Netzwerkressource des Leistungsanbieters (EMP) unter der Verwendung des Ressourcenidentifikators , zur Initiierung eines Zertifikatsvalidierungsprotokolls über die Kommunikationsverbindung unter Verwendung des digitalen Zertifikats (CER); und;
- ein Autorisierungsmodul zur Autorisierung eines Leistungsbezugs , zwischen dem Leistungsbezieher und der Abgabestation, in Abhängigkeit einer Antwort (RSP) gemäß dem Zertifikatsvalidierungsprotokoll.

## Claims

1. Method for the certificate-based authorization of a service user, comprising the following steps of:
a) receiving an authentication data item (AUT) relating to the service user (USR) at a delivery station (CP),
b) extracting a digital certificate (CER) from the authentication data item and extracting at least one certificate attribute from the digital certificate (CER);
c) forming a resource identifier for addressing a network resource of a service provider (EMP) to be assigned to the service user (USR) in such a way that a section of a character string representation of the resource identifier contains at least one section which is formed on the basis of at least the certificate attribute and a further section of the character string representation of the resource identifier contains at least one data item selected by the delivery station (CP);
d) establishing a communication connection from the delivery station to the network resource of the service provider (EMP) using the resource identifier;
e) initiating a certificate validation protocol via the communication connection using the digital certificate (CER); and
f) authorizing a service procurement, between the service user and the delivery station, on the basis of a response (RSP) in accordance with the certificate validation protocol.

2. Method according to Patent Claim 1, **characterized in that** the section of the character string representation of the resource identifier formed on the basis of the at least one certificate attribute contains at least one section of a character string representation of the certificate attribute.

3. Method according to one of the preceding patent claims, **characterized in that** the further section of the character string representation of the resource identifier containing a data item selected by the delivery station (CP) contains at least one identification of the delivery station.

4. Method according to one of the preceding patent claims, **characterized in that** an online certificate status protocol or OCSP or a server-based certificate validation protocol or SCP is used as the certificate validation protocol.

5. Method according to one of the preceding patent claims, **characterized in that** a response (RSP) received after the initiation of the certificate validation protocol is examined in order to determine whether this contains a reference to a resource identifier for addressing an alternative network resource.

6. Method according to Patent Claim 5, **characterized in that** steps d) to e) are carried out again with the resource identifier for addressing the alternative network resource.

7. Method according to Patent Claim 6, **characterized in that**, before carrying out steps d) to e) again, a confirmation by the service user (USR) is requested.

8. Method according to Patent Claim 7, **characterized in that**, before requesting their confirmation, one or more framework data relating to the service procurement offered by the alternative resource identifier are displayed to the service user (USR).

9. Method according to one of the preceding patent claims, **characterized by** the steps of:
- establishing a communication connection between a server of the service provider and a mobile terminal of the service user;
- exchanging further data on the service procurement via the communication connection.

10. Authorization device for the certificate-based authorization of a service user at a delivery station, comprising:
- an authentication module for receiving an authentication data item (AUT) relating to the service user (USR), for extracting a digital certificate (CER) from the authentication data item and for extracting at least one certificate attribute from the digital certificate (CER);
- an assignment module for forming a resource identifier for addressing a network resource of a service provider (EMP) to be assigned to the service user (USR) in such a way that a section of a character string representation of the resource identifier contains at least one section which is formed on the basis of at least the certificate attribute and a further section of the character string representation of the resource identifier contains at least one data item selected by the delivery station (CO);
- an interface module for establishing a communication connection from the delivery station to the network resource of the service provider (EMP) using the resource identifier, and for initiating a certificate validation protocol via the communication connection using the digital certificate (CER); and
- an authorization module for authorizing a service procurement, between the service user and the delivery station, on the basis of a response (RSP) in accordance with the certificate validation protocol.

## Revendications

1. Procédé d'autorisation basée sur un certificat d'un utilisateur de service, comprenant les étapes suivantes :
a) réception d'une donnée d'authentification (AUT) de l'utilisateur de service (USR) à une station de distribution (CP),
b) retrait d'un certificat numérique (CER) à partir de la donnée d'authentification et extraction d'au moins un attribut de certificat du certificat numérique (CER) ;
c) formation d'un identifiant de ressource pour l'adressage d'une ressource de réseau d'un fournisseur de service (EMP) à faire correspondre à un utilisateur de service (USR), de sorte qu'une section de représentation en chaîne de caractères de l'identifiant de ressources contienne au moins une section formée sur la base d'au moins un attribut de certificat et de sorte qu'une autre section de la représentation en chaîne de caractères de l'identifiant de ressource contienne au moins une donnée choisie par la station de distribution (CP) ;
d) établissement d'une liaison de communication depuis la station de distribution jusqu'à la ressource de réseau du fournisseur de service (EMP) en utilisant l'identifiant de ressource ;
e) lancement d'un protocole de validation de certificat sur la liaison de communication en utilisant le certificat numérique (CER) ; et
f) autorisation d'une prestation entre le fournisseur de service et la station de distribution en fonction d'une réponse (RSP) selon le protocole de validation de certificat.

2. Procédé selon la revendication 1, **caractérisé en ce que** la section de la représentation en chaîne de caractères de l'identifiant de ressource créée sur la base de l'au moins un attribut de certificat contient au moins une section d'une représentation en chaîne de caractères de l'attribut de certificat.

3. Procédé selon l'une des revendications précédentes, **caractérisé en ce que** l'autre section de la représentation en chaîne de caractères de l'identifiant de ressource contenant une donnée, choisie par la station de distribution (CP), contient au moins une identification de la station de distribution.

4. Procédé selon l'une des revendications précédentes, **caractérisé en ce qu'**est utilisé comme protocole de validation de certificat un protocole de vérification de certificat en ligne (OCSP) ou un protocole de validation de certificat sur serveur (SCP).

5. Procédé selon l'une des revendications précédentes, **caractérisé en ce que** suite à la réception d'une réponse (RSP) après le lancement du protocole de validation de certificat, on vérifie si elle contient une référence à un identifiant de ressource pour l'adressage d'une ressource de réseau alternative.

6. Procédé selon la revendication 5, **caractérisé en ce que** les étapes d) à e) sont effectuées à nouveau avec l'identifiant de ressource pour l'adressage de la ressource de réseau alternative.

7. Procédé selon la revendication 6, **caractérisé en ce qu'**une confirmation par l'utilisateur de service (USR) est demandée avant d'effectuer à nouveau les étapes d) à e).

8. Procédé selon la revendication 7, **caractérisé en ce qu'**une ou plusieurs données générales de la prestation proposée par l'identifiant de ressource alternative sont affichées à l'utilisateur de service (USR) avant demande de confirmation.

9. Procédé selon l'une des revendications précédentes, **caractérisé par** les étapes de :
- établissement d'une liaison de communication entre un serveur du fournisseur de service et un terminal mobile de l'utilisateur de service ;
- échange d'autres données pour la prestation via la liaison de communication.

10. Dispositif d'autorisation pour l'autorisation basée sur un certificat d'un utilisateur de service à une station de distribution, comprenant :
- un module d'authentification pour récupérer une donnée d'authentification (AUT) de l'utilisateur de service (USR), pour retirer un certificat numérique (CER) à partir de la donnée d'authentification et pour extraire au moins un attribut de certificat du certificat numérique (CER) ;
- un module d'affectation pour former un identifiant de ressource pour l'adressage d'une ressource de réseau d'un fournisseur de service (EMP) à faire correspondre à un utilisateur de service (USR), de sorte qu'une section de représentation en chaîne de caractères de l'identifiant de ressources contienne au moins une section formée sur la base d'au moins un attribut de certificat et de sorte qu'une autre section de la représentation en chaîne de caractères de l'identifiant de ressource contienne au moins une donnée choisie par la station de distribution (CO) ;
- un module d'interface pour établir une liaison de communication depuis la station de distribution jusqu'à la ressource de réseau du fournisseur de service (EMP) en utilisant l'identifiant de ressource, pour lancer un protocole de validation de certificat sur la liaison de communication en utilisant le certificat numérique (CER) ; et
- un module d'autorisation pour autoriser une prestation entre le fournisseur de service et la station de distribution en fonction d'une réponse (RSP) selon le protocole de validation de certificat.
